# EUROPEAN PATENT APPLICATION

(11) **EP 4 818 102 A1**
(43) Date of publication of application: **07.10.2026**
(21) Application number: 24896270.6
(22) Date of filing: 13.11.2024
(51) Int. Cl.: B66C 13/06, B63B 27/16, B66C 13/08, F03D 13/25

(54) **HEAVE COMPENSATION TOOL, HEAVE COMPENSATION SYSTEM, AND HEAVE COMPENSATION METHOD**

(30) Priority: 30.11.2023 CN 202311634991
(71) Applicant: Jiangsu Goldwind Science & Technology Co., Ltd., Yancheng, Jiangsu 224100 (CN); Goldwind Pioneer Technology (Yancheng) Co., Ltd., Yancheng, Jiangsu 224001 (CN)
(72) Inventor: SHEN, Xingxing, Yancheng, Jiangsu 224100 (CN); ZHANG, Zhu, Yancheng, Jiangsu 224100 (CN); CHENG, Wei, Yancheng, Jiangsu 224100 (CN)
(74) Representative: Gulde & Partner
(86) International application number: PCT/CN2024/131727
(87) International publication number: WO 2025/113179

(57) **Abstract**

A heave compensation tool, comprising: a main body portion (100); a moving block (101) slidably mounted on the main body portion; a driving mechanism used for driving the moving block to slide in the axial direction of the main body portion; and a first sensor (104) used for detecting the heave state of the moving block. The main body portion is provided with a first hoisting portion (102), and the moving block is provided with a second hoisting portion (103). Also provided are a heave compensation system and a heave compensation method. The heave compensation tool can keep a unit component to be mounted and a mounted unit component relatively static, and keeps the lifting force of a crane unchanged, thereby solving the "static against dynamic" problem.

## Description

The present application claims priority to Chinese Patent Application No. 202311634991.4, filed with the China National Intellectual Property Administration on November 30, 2023, entitled "HEAVE COMPENSATION TOOL, HEAVE COMPENSATION SYSTEM, AND HEAVE COMPENSATION METHOD", the entire contents of which are incorporated herein by reference.

### FIELD

The present application relates to the technical field of offshore wind power, and specifically to a heave compensation tool, a heave compensation system, and a heave compensation method.

### BACKGROUND

Currently, the construction process for floating wind turbines mainly involves assembling the wind turbine onto a floating foundation at the dock using a crane, and then transporting the entire assembly to the installation site via wet tow. Due to the very high weight and height of cost-effective, large-capacity units, there is no large and suitable crane available on the market for assembling such units at the dock. Even if such crane exists, bearing capacities of the dock are very limited, and docks capable of handling such large loads are extremely scarce. Furthermore, after the floating wind turbine is assembled at the dock, the floating foundation and the wind turbine need to be towed over long distances from the dock to the offshore installation site. If strong convective weather or a typhoon is encountered during the towing process, the transportation risk is extremely high, with potentially catastrophic consequences. At the same time, existing solutions for replacing major components of floating wind turbines involve towing the entire floating body and wind turbine back to the dock, resulting in very high maintenance costs for floating wind turbines.

It can be foreseen that, in the future, installing and maintaining large-capacity floating wind turbines at offshore installation sites will become the mainstream. However, installation and maintenance at offshore sites, when using a jack-up platform, will face a static-to-dynamic installation condition. For example, when a crane lifts a component to be installed and it is aligned for connection with a component already installed on a floating foundation, before the bolts are inserted, the movement of the floating foundation causes constant fluctuations in the lifting force of the crane. This results in the mating surfaces of the components intermittently having gaps or being in contact, making it difficult for personnel to install and tighten the bolts. In severe cases, this can lead to risks such as the toppling of components, the collapse of the crane boom of the installation vessel, or damage to the component flanges.

Therefore, there is an urgent problem to be solved in the art for a heave compensation tool that can safely enable the installation and maintenance of floating wind turbines at offshore installation sites.

### SUMMARY

An object of the present application is to provide a heave compensation tool, a heave compensation system, and a control method, which can safely enable the installation and maintenance of floating wind turbines at offshore installation sites.

To solve the above technical problem, the present application provides a heave compensation tool, which includes:
a main body portion;
a moving blockslidably mounted on the main body portion;
a driving mechanism, for driving the moving block to slide along an axial direction of the main body portion;
a first sensor for detecting a heave state of the moving block;
the main body portion is provided with a first lifting portion, and the moving block is provided with a second lifting portion.

Optionally, the first sensor is arranged on the moving block.

Optionally, the driving mechanism and the first sensor are both electrically connected to a controller, and the controller is used to control the action of the driving mechanism so that the moving block has a preset heave displacement.

Optionally, the heave compensation tool further includes an adjustment mechanism, the adjustment mechanism is connected between the moving block and the second lifting portion, and the adjustment mechanism is capable of driving the second lifting portion to move along a first direction and a second direction, and the first direction is perpendicular to the second direction, and the second direction is perpendicular to the axial direction of the main body portion, and the first direction is perpendicular to the axial direction of the main body portion.

Optionally, the heave compensation tool further includes a rotation mechanism, the rotation mechanism is connected between the main body portion and the first lifting portion, and the rotation mechanism is capable of driving the main body portion to rotate relative to the first lifting portion.

Optionally, the heave compensation tool further includes a self-stabilizing mechanism, the self-stabilizing mechanism is used to connect the main body portion and a boom of a lifting device, and to adjust the tension force between the main body portion and the boom, so as to stabilize the posture of the heave compensation tool.

Optionally, the heave compensation tool further includes a self-stabilizing mechanism, the self-stabilizing mechanism includes a telescopic unit, a connecting rope, and a tension sensor, the telescopic unit is arranged on the main body portion, the telescopic unit and the connecting rope are connected to each other, and an end of the connecting rope remote from the telescopic unit is used for connecting to the boom.

Optionally, a telescopic direction of the telescopic unit has an included angle with the axial direction of the main body portion.

Optionally, the tension sensor is arranged on the connecting rope.

Optionally, the telescopic unit and the tension sensor are both electrically connected to a controller, and the controller is used to control the telescoping of the telescopic unit so that the tension of the connecting rope is constant.

The present application also provides a heave compensation system, which includes the aforementioned heave compensation tool,
the first lifting portion of the heave compensation tool is connected to a lifting device, and the second lifting portion is connected to a wind turbine component to be installed;
a second sensor is further included, the second sensor is used to detect the heave state of an already installed wind turbine component, and the second sensor is electrically connected to the controller.

The heave compensation system of the present application includes the aforementioned heave compensation tool, thus has the same technical effects as the aforementioned heave compensation tool, which will not be repeated here.

The present application also provides a heave compensation method, based on the aforementioned heave compensation system, including the following steps:
detecting a heave state of an already installed wind turbine component, and controlling a moving block to perform heave compensation, so that the already installed wind turbine component and the moving block have the same heave displacement.

The heave compensation method of the present application is based on the aforementioned heave compensation system, thus has the same technical effects as the aforementioned heave compensation system, which will not be repeated here.

Optionally, before hoisting a wind turbine component to be installed, the heave compensation method further includes the following step:
controlling an adjustment mechanism to act, and driving a second lifting portion move along a first direction and a second direction, so that the lifting position of the second lifting portion corresponds to a lifting point position on a lifting tool of the wind turbine component to be installed.

Optionally, the heave compensation method further includes the following step:
controlling a rotation mechanism to act, and driving a main body portion to rotate relative to a first lifting portion, so that a flange reference line of the wind turbine component to be installed can be aligned with a flange reference line of the already installed wind turbine component.

Optionally, the heave compensation method further includes the following step:
detecting tension of a connecting rope, and when the tension of the connecting rope deviates from a preset tension, controlling a telescopic unit to telescope, and when the tension of the connecting rope returns to the preset tension, controlling the telescopic unit to stop acting.

The heave compensation tool of the present application can be applied to offshore installation and maintenance of floating wind turbines, specifically for connecting a wind turbine component to be installed with a wind turbine component already installed on a floating foundation for assembly, or for replacing wind turbine components, in order to solve the "static-to-dynamic" connection problem encountered during the connection of a wind turbine component to be installed and an already installed wind turbine component due to the movement of the floating foundation

### BRIEF DESCRIPTION OF THE ACCOMPANYING DRAWINGS

FIG. 1 is a schematic structural view of a specific embodiment of the heave compensation tool provided by the present application;
FIG. 2 is a schematic structural view of the heave compensation tool of FIG. 1 from a second angle;
FIG. 3 is a schematic structural view of the heave compensation tool of FIG. 1 from a third angle;
FIG. 4 is a schematic structural view of the heave compensation tool of FIG. 1 from a fourth angle;
FIG. 5 is a schematic structural view of the heave compensation tool of FIG. 1 from a fifth angle;
FIG. 6 is a schematic structural view of the heave compensation tool of FIG. 1 from a sixth angle;
FIG. 7 is a working state diagram of the heave compensation tool of FIG. 1;
   the description of reference signs in FIG. 1 to FIG. 7 is as follows:
   1-heave compensation tool; 100-main body portion; 1001-base; 1002-vertical beam; 100a-guide rail; 101-moving block; 101a-engaging protrusion; 102-first lifting portion; 1021-lifting beam; 1022-lifting seat; 103-second lifting portion; 1031-lifting seat; 1031a-slider; 1031b-second lug; 1031c-lifting ring; 104-first sensor; 105-controller; 106-lifting belt; 107-first driving portion; 1071-first driving unit; 1071a-connecting plate; 1072-gear; 1073-rack; 108-second driving portion; 1081-first connecting arm; 1082-second connecting arm; 108a-long arm portion; 108b-connecting arm portion; 1083-hinge shaft; 1084-second driving unit; 109-accumulator; 110-connecting assembly; 1101-first lug; 111-adjustment mechanism; 1111-third driving unit; 1112-first lead screw; 1113-first lead screw nut; 1114-adjustment arm; 1114a-first adjustment arm; 1114b-second adjustment arm; 1115-fourth driving unit; 112-third lug; 113-rotation mechanism; 1131-connecting bearing; 1131a-meshing tooth portion; 1132-driving tooth portion; 1133-power component; 1134-first bevel gear; 1135-second bevel gear; 114-mounting plate; 115-fourth lug; 116-fifth lug; 117-self-stabilizing mechanism; 1171-telescopic unit; 1171a-X-shaped telescopic frame; 1171b-sixth driving unit; 1171c-second lead screw; 1171d-second lead screw nut; 1172-connecting rope; 1173-tension sensor; 118-sixth lug; 119-connecting block; 120-power supply unit; a-first connection slot; b-second connection slot; c-engaging slot; d-guide slot;
   2-wind turbine component to be installed;
   3-floating foundation;
   4-already installed wind turbine component;
   5-jack-up platform installation vessel; 511-hook; 512-boom;
   6-second sensor

### DETAILED DESCRIPTION OF THE EMBODIMENTS

To enable those skilled in the art to better understand the technical solutions of the present application, the present application is further described in detail below with reference to the accompanying drawings and specific embodiments.

The term "multiple" as used herein generally refers to two or more; and when "multiple" is used to indicate the quantity of certain components, it is not intended to represent a quantitative relationship between these components.

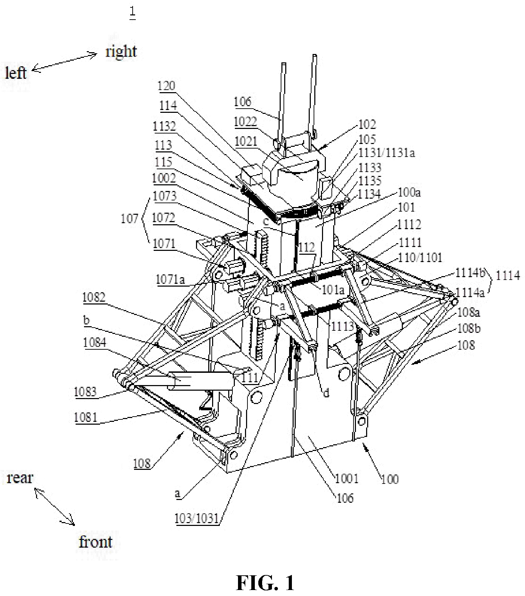

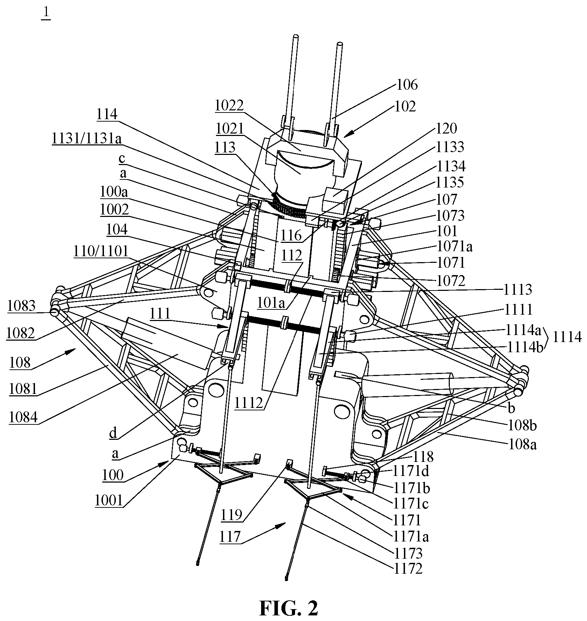

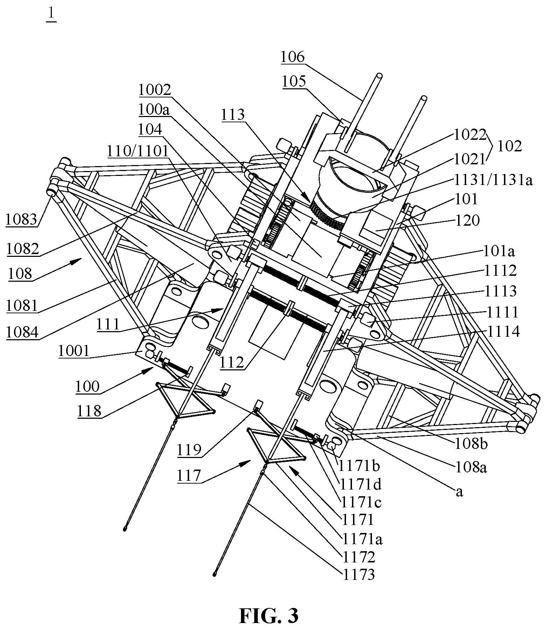

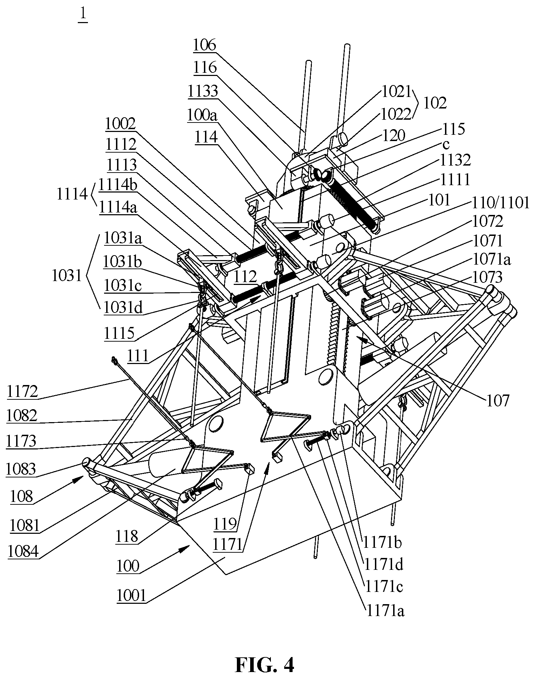

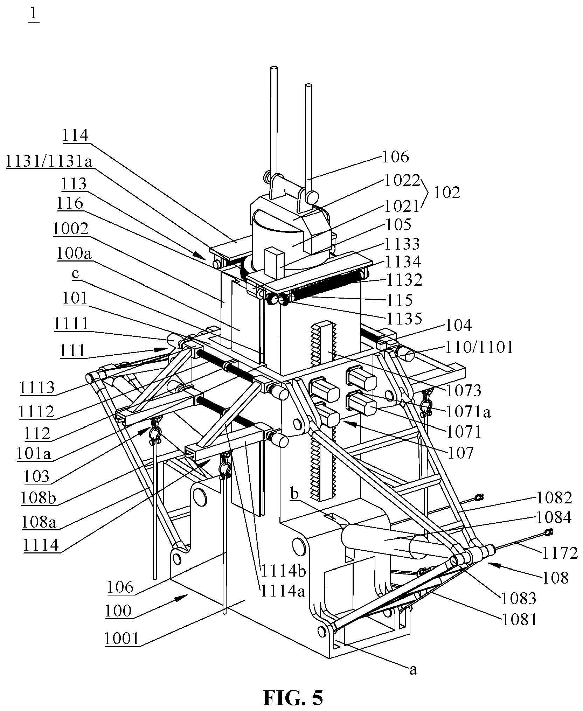

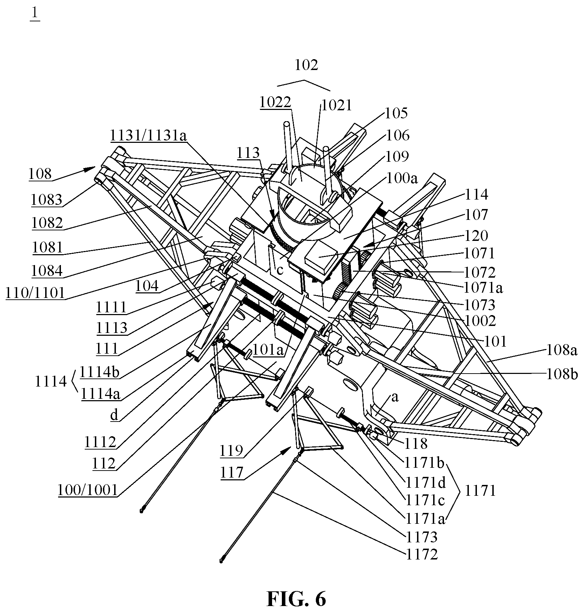

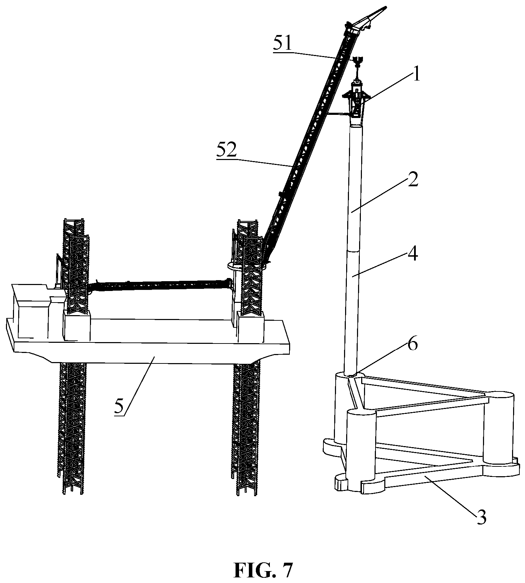

Please refer to FIG. 1 to FIG. 7. FIG. 1 is a schematic structural view of a specific embodiment of the heave compensation tool provided by the present application; FIG. 2 is a schematic structural view of the heave compensation tool of FIG. 1 from a second angle; FIG. 3 is a schematic structural view of the heave compensation tool of FIG. 1 from a third angle; FIG. 4 is a schematic structural view of the heave compensation tool of FIG. 1 from a fourth angle; FIG. 5 is a schematic structural view of the heave compensation tool of FIG. 1 from a fifth angle; FIG. 6 is a schematic structural view of the heave compensation tool of FIG. 1 from a sixth angle; FIG. 7 is a working state diagram of the heave compensation tool of FIG. 1.

The present application provides a heave compensation tool 1, including:
a main body portion 100;
a moving block 101 slidably mounted on the main body portion 100;
a driving mechanism for driving the moving block 101 to slide along an axial direction of the main body portion 100;
a first sensor 104 arranged on the moving block 101 for detecting a heave displacement of the moving block 101;
and the main body portion 100 is provided with a first lifting portion 102, the moving block 101 is provided with a second lifting portion 103, the driving mechanism and the first sensor 104 are both electrically connected to a controller 105, and the controller 105 is used to control the action of the driving mechanism so that the moving block 101 has a preset heave displacement.

The heave compensation tool 1 of the present application can be applied to offshore installation and maintenance of floating wind turbines, specifically for connecting a wind turbine component 2 to be installed with a wind turbine component 4 already installed on a floating foundation 3 for assembly, or for replacing wind turbine components. To solve the "static-to-dynamic" problem encountered during the connection or disassembly of the wind turbine component 2 to be installed and the already installed wind turbine component 4 due to the movement of the floating foundation 3, the present application proposes a heave compensation tool 1. The heave compensation tool 1 is connected between a hook 51 of a crane on a jack-up platform installation vessel 5 and the wind turbine component 2 to be installed.

Specifically, the hook 51 is connected to the first lifting portion 102 via a lifting belt 106, and the wind turbine component 2 to be installed is connected to the second lifting portion 103 via the lifting belt 106. The controller 105 is the control core of the entire heave compensation tool 1. The controller 105 can calculate the heave displacement that the moving block 101 needs to compensate based on the heave state of the floating foundation 3, and controls the driving mechanism to start. The driving mechanism can drive the moving block 101 to slide along the axial direction of the main body portion 100, so as to perform heave compensation. At the same time, the first sensor 104 arranged on the moving block 101 can measure the heave displacement value of the moving block 101 in real time and transmit the detection result to the controller 105. The controller 105 can compare the heave displacement of the moving block 101 detected by the first sensor 104 to the heave displacement of the floating foundation 3 until the two displacement values are equal. That is, the preset heave displacement of the moving block 101 is equal to the heave displacement of the floating foundation 3. At this time, the controller 105 controls the driving mechanism to stop moving. According to the amplitude and frequency of the movement of the floating foundation 3, the heave compensation tool 1 of the present application will repeatedly perform heave compensation on the wind turbine component 2 to be installed through the moving block 101, always keeping the wind turbine component 2 to be installed and the already installed wind turbine component 4 relatively stationary. In this way, the lifting force of the crane can remain constant, making it more effective and safer for personnel to loosen or tighten the connecting bolts of the wind turbine components. Furthermore, during hoisting, incidents such as the toppling of wind turbine components, the collapse of the crane boom 52, or damage to the flanges of the wind turbine components will not occur.

It can be seen that the heave compensation tool 1 of the present application can solve the "static-to-dynamic" problem encountered during the connection or disassembly of the wind turbine component 2 to be installed and the already installed wind turbine component 4 due to the movement of the floating foundation 3, safely enables the installation and maintenance of large-capacity floating wind turbines at offshore installation sites, and ensures the feasibility of offshore construction processes for large-capacity floating wind turbines. At the same time, the process solution of installing floating wind turbines at offshore installation sites using the heave compensation tool 1 eliminates the need for large-tonnage dockside cranes and the occupation of dock resources for modifying dock bearing capacity, which can significantly reduce the construction cost of large-capacity floating wind turbines. Furthermore, offshore installation of floating wind turbines eliminates the need for the overall towing of the floating foundation 3 and the wind turbine, significantly reducing towing costs and the uncertain risks during towing, such as typhoon interference, thereby lowering transportation risks. Additionally, the use of this heave compensation tool 1 can also accommodate the future replacement of major components of floating wind turbines, ensures the feasibility of future deep-sea, large-capacity floating wind turbine maintenance at sea, and eliminates the need for the existing method of towing the entire assembly back to the dock for major component replacement, thereby significantly reducing the maintenance cost of floating wind turbines.

It can be seen from FIG. 1 that, in this embodiment, the controller 105 is arranged at the upper end of the main body portion 100. In practical applications, the arrangement position of the controller 105 does not affect its functions, so the arrangement position of the controller 105 is not limited. The control principle of the controller 105 is well-known prior art to those skilled in the art and will not be repeated here.

It can be understood that the heave compensation tool 1 of the present application can be applied not only to offshore installation and maintenance of floating wind turbines but also to other "static-to-dynamic" conditions requiring heave compensation. In practical applications, the moving block 101 is connected to a "static unit", and the controller 105 can obtain the heave state of a "dynamic unit", and perform heave compensation through the moving block 101, so as to ensure the preset heave displacement of the moving block 101 to be the same as the heave displacement of the "dynamic unit", thereby ensuring that the "static unit" and the "dynamic unit" always remain relatively stationary.

In the present application, the first sensor 104 is a displacement sensor, which can directly detect the heave displacement of the moving block 101. In practice, the first sensor 104 can also be an acceleration sensor. The first sensor 104 is used to detect the heave acceleration of the moving block 101, and transmits the detected heave acceleration of the moving block 101 to the controller 105. The controller 105 obtains the heave displacement of the moving block 101 after a series of calculations, such as double integration. It can be seen that the first sensor 104 is actually used for detecting the heave state of the moving block 101.

As mentioned above, when the heave compensation tool 1 of the present application is applied to offshore installation and maintenance of floating wind turbines, the controller 105 can obtain the heave state of the floating foundation 3. Specifically, as shown in FIG. 7, a second sensor 6 can be arranged on the floating foundation 3 or the already installed wind turbine component 4 on the floating foundation 3. The second sensor 6 is electrically connected to the controller 105. The second sensor 6 can be an acceleration sensor or a displacement sensor, wherein:
when the second sensor 6 is an acceleration sensor, the second sensor 6 is used to detect the heave acceleration of the floating foundation 3, and transmits the detected heave acceleration to the controller 105. The controller 105 obtains the heave displacement of the floating foundation 3 after a series of calculations, such as double integration;
when the second sensor 6 is a displacement sensor, the second sensor 6 can directly detect the heave displacement of the floating foundation 3 and transmit the detected heave displacement to the controller 105.

As mentioned above, the heave compensation tool 1 of the present application includes a driving mechanism for driving the moving block 101 to slide along the axial direction of the main body portion 100. In this embodiment, the driving mechanism includes a first driving portion 107.

Specifically, the first driving portion 107 includes a gear and rack transmission unit and a first driving unit 1071. The gear and rack transmission unit includes a gear 1072 and a rack 1073 that mesh with each other. The rack 1073 is arranged on the main body portion 100 and extends along the axial direction of the main body portion 100. The first driving unit 1071 can be a driving motor. The driving motor is arranged on the moving block 101. The output shaft of the driving motor is connected to the gear 1072 in a one-to-one correspondence for driving the gear 1072 to rotate. The controller 105 is electrically connected to the driving motor.

In this way, when it is necessary to control the moving block 101 to perform heave movement, the controller 105 can control the driving motor to start. The output shaft of the driving motor rotates and drives the gear 1072 to rotate synchronously. Under the meshing action of the gear 1072 and the rack 1073, the gear 1072 can simultaneously move along the extension direction of the rack 1073, thereby realizing the sliding of the moving block 101 along the axial direction of the main body portion 100.

It can be seen from FIG. 1 that, in this embodiment, there are two first driving portions 107, which are arranged on the left and right sides of the main body portion 100. In this way, the two first driving portions 107 can be started simultaneously, and the left and right sides of the moving block 101 are subjected to equal driving forces, ensuring that the moving block 101 can slide stably along the axial direction of the main body portion 100. At the same time, the two first driving portions 107 belong to a redundant design, providing higher reliability.

In practical applications, the number of first driving portion 107 is not limited, for example, the number of first driving portion 107 can be at least one.

It can be seen from FIG. 1 that, in this embodiment, the rack 1073 is provided with teeth on both sides in the width direction. The number of gears 1072 is four. Two gears 1072 are grouped and distributed on both sides of the rack 1073 in the width direction, meshing with the teeth on the corresponding sides of the rack 1073. Each group of first driving portions 107 has four first driving units 1071, and the output shafts of the first driving units 1071 are connected to the gears 1072 in a one-to-one correspondence.

In this way, the four first driving units 1071 can act simultaneously, driving the four gears 1072 to slide synchronously along the axial direction of the rack 1073, providing a greater driving force and realizing the sliding of the moving block 101 along the axial direction of the main body portion 100. At the same time, the four first driving units 1071 belong to a redundant design, providing higher reliability.

In practical applications, the numbers of first driving units 1071 and gears 1072 in each group of first driving portions 107 are not limited. The numbers of first driving units 1071 and gears 1072 in each group of first driving portions 107 can be at least one, and the numbers thereof correspond one-to-one.

In addition, in this embodiment, there is one rack 1073, which is provided with teeth on both sides in the width direction. Two gears 1072 form a group and are distributed on both sides of the rack 1073 in the width direction. In practice, it is also feasible to arrange all four gears 1072 on the same side of the rack 1073, with the four gears 1072 distributed sequentially along the axial direction of the rack 1073. Of course, the arrangement of this embodiment can make fuller use of the space on both sides of the rack 1073, reduce the axial dimensions of the main body portion 100 and the rack 1073, thereby reducing the overall volume of the heave compensation tool 1, making it a more preferred technical solution.

Furthermore, in practice, the number of racks 1073 can be one or more. For example, there are two racks 1073 arranged side by side, and each rack 1073 is correspondingly meshed with two gears 1072.

As mentioned above, the rack 1073 is arranged on the main body portion 100. In practice, the connection method between the rack 1073 and the main body portion 100 is not limited. For example, the rack 1073 can be fixed to the main body portion 100 by welding.

As mentioned above, the first driving unit 1071 is arranged on the moving block 101. Specifically in this embodiment, as shown in FIG. 5, the first driving unit 1071 has an annular connecting plate 1071a. The first driving unit 1071 is located outside the moving block 101. The connecting plate 1071a is fixedly connected to the corresponding outer side wall of the moving block 101 via connecting pieces, such as bolts. The output shaft of the first driving unit 1071 passes through the corresponding side wall of the moving block 101 and is connected to the gear 1072. At the same time, to improve the rotational smoothness of the output shaft, a rotating bearing can be installed inside the corresponding side wall of the moving block 101, and the output shaft passes through the rotating bearing to connect with the gear 1072.

In practice, the connection method between the connecting plate 1071a and the corresponding outer side wall of the moving block 101 is not limited. For example, it is also feasible to fix the connecting plate 1071a to the corresponding outer side wall of the moving block 101 by welding.

It can be understood that the corresponding side wall of the moving block 101 must has a through hole for installing the rotating bearing and for the output shaft of the first driving unit 1071 to pass through. In practical applications, the inner diameter of the through hole can be larger than the diameter of the output shaft of the first driving unit 1071, so that when the output shaft of the first driving unit 1071 passes through the through hole, there is a gap between the output shaft of the first driving unit 1071 and the inner wall of the through hole, thereby preventing friction between the through hole and the output shaft of the first driving unit 1071 from hindering the normal rotation of the output shaft. In this case, it is also feasible not to provide a rotating bearing.

As mentioned above, the output shaft of the first driving unit 1071 is connected to the gear 1072 in a one-to-one correspondence. The specific connection method is not limited. For example, the output shaft of the first driving unit 1071 and the gear 1072 can be connected by welding, screwing, or through a wedge key.

In this embodiment, the rack 1073 is arranged on the main body portion 100, and the first driving unit 1071 is arranged on the moving block 101. In practical applications, it is also feasible that the rack 1073 is arranged on the moving block 101, and the first driving unit 1071 is arranged inside the main body portion 100, with the output shaft of the first driving unit 1071 passing from the inside to the outside to connect with the gear 1072. Of course, the main body portion 100 has a larger axial space for installing the rack 1073, and it is more convenient to install the first driving unit 1071 on the moving block 101. Therefore, the arrangement of this embodiment is a more preferred technical solution.

In practical applications, the first driving portion 107 is not limited to the above combination of the gear and rack transmission unit and the first driving unit 1071. For example, the first driving portion 107 can also include a lead screw and nut transmission unit and the first driving unit 1071. The lead screw and nut transmission unit includes a lead screw and a lead screw nut threaded onto the lead screw. The lead screw is threadedly connected to the nut. The lead screw is rotatably mounted on the main body portion 100, and the extension direction of the lead screw is the axial direction of the main body portion 100. The nut is arranged on the moving block 101. The first driving unit 1071 can be a driving motor. The output shaft of the driving motor is connected to the lead screw. The output shaft of the driving motor can drive the lead screw to rotate. Under the threaded engagement action of the lead screw and the nut, the nut moves along the extension direction of the lead screw, thereby realizing the sliding of the moving block 101 along the axial direction of the main body portion 100.

Further, in this embodiment, the driving mechanism also includes a second driving portion 108.

Specifically, as shown in FIG. 5, the second driving portion 108 includes a first connecting arm 1081 and a second connecting arm 1082. The first connecting arm 1081 and the second connecting arm 1082 are hinged via a hinge shaft 1083. A free end of the first connecting arm 1081 is hinged to the main body portion 100. A free end of the second connecting arm 1082 is hinged to the moving block 101. The second driving portion 108 also includes a second driving unit 1084. The second driving unit 1084 is hinged to the main body portion 100. An output shaft of the second driving unit 1084 is hinged to the hinge shaft 1083. The output shaft of the second driving unit 1084 can extend or retract, and drive the first connecting arm 1081 and the second connecting arm 1082 to rotate around the hinge shaft 1083, so as to adjust the size of the included angle between the first connecting arm 1081 and the second connecting arm 1082. The second driving unit 1084 is electrically connected to the controller 105.

In this way, when it is necessary to control the moving block 101 to perform heave movement, the controller 105 can control the output shaft of the second driving unit 1084 to extend or retract. When the output shaft of the second driving unit 1084 gradually extends, the first connecting arm 1081 and the second connecting arm 1082 rotate around the hinge shaft 1083 and approach each other, the included angle between the first connecting arm 1081 and the second connecting arm 1082 gradually decreases, and the moving block 101 moves downward along the axial direction of the main body portion 100. When the output shaft of the second driving unit 1084 gradually retracts, the first connecting arm 1081 and the second connecting arm 1082 rotate around the hinge shaft 1083 and move away from each other, the included angle between the first connecting arm 1081 and the second connecting arm 1082 gradually increases, and the moving block 101 moves upward along the axial direction of the main body portion 100.

In this embodiment, the second driving unit 1084 is a hydraulic cylinder, and it also includes an accumulator 109. As shown in FIG. 6, the accumulator 109 is arranged inside the main body portion 100 and is used to provide a power source for the hydraulic cylinder. In practical applications, the second driving unit 1084 can also be an air cylinder, an electric cylinder, etc.

It can be seen from FIG. 6 that, in this embodiment, there are two second driving portions 108, which are arranged on the left and right sides of the main body portion 100. In this way, the two second driving portions 108 can be started simultaneously, and the left and right sides of the moving block 101 are subjected to equal driving forces, ensuring that the moving block 101 can slide stably along the axial direction of the main body portion 100. At the same time, the two second driving portions 108 belongs to a redundant design, providing higher reliability.

In practical applications, the number of second driving portion 108 is not limited, for example, the number of second driving portion 108 can be at least one.

It can be seen from FIG. 1 that, in this embodiment, both the left and right side walls of the main body portion 100 and the moving block 101 each are provided with two first connection slots **a**. The structures of the first connecting arm 1081 and the second connecting arm 1082 are the same, each including two long arm portions 108a. The free ends of the two long arm portions 108a are hinged inside the corresponding first connection slots **a** via pins. The width between the two long arm portions 108a gradually decreases towards the end away from the main body portion 100/moving block 101. The two long arm portions 108a are connected together by multiple connecting arm portions 108b. The ends of the two long arm portions 108a away from the main body portion 100/moving block 101 are rotatably connected to the hinge shaft 1083, realizing the hinged connection of the first connecting arm 1081 and the second connecting arm 1082.

It can be seen that, in this embodiment, the first connecting arm 1081 is connected to the main body portion 100 via two connection points, and the second connecting arm 1082 is connected to the moving block 101 via two connection points, providing higher connection stability.

In practical applications, the specific structures of the first connecting arm 1081 and the second connecting arm 1082 are not limited, as long as they are hinged to each other and can realize the connection of the main body portion 100 and the moving block 101. For example, if the structural strength meets the requirements, the first connecting arm 1081 and the second connecting arm 1082 can also be in the form of elongated rods.

As shown in FIG. 1, in this embodiment, two sets of connecting assemblies 110 are provided on the left and right side walls of the moving block 101. The connecting assembly 110 specifically includes two oppositely arranged first lugs 1101, and the first connection slot **a** is formed between the two first lugs 1101. Of course, in practical applications, the structure of the connecting assembly 110 is not limited. For example, it is also feasible for the connecting assembly 110 to include a single connecting plate, and the free end of the long arm portion 108a is hinged to the connecting plate via a pin.

As shown in FIG. 1, in this embodiment, the main body portion 100 is also processed with a second connection slot **b**. The second connection slot **b** is located above the first connection slot **a**. The connecting end of the second driving unit 1084 is hinged inside the second connection slot **b** via a pin.

In practical applications, the method for connecting the second driving unit 1084 and the main body portion 100 is also not limited. For example, the main body portion 100 can also be provided with a connecting plate, and the second driving unit 1084 is hinged to the connecting plate via a pin.

In addition, in this embodiment, the main body portion 100 specifically includes a base 1001 and a vertical beam 1002. The base 1001 is welded and fixed to the lower end of the vertical beam 1002. The width of the base 1001 is greater than the width of the vertical beam 1002. The second driving unit 1084 and the first connecting arm 1081 are both hinged to the base 1001. In practical applications, it is also feasible for the base 1001 and the vertical beam 1002 to be integrally formed.

From the foregoing, it can be seen that the heave compensation tool 1 of the present application is simultaneously provided with the first driving portion 107 and the second driving portion 108 for realizing the sliding of the moving block 101 along the axial direction of the main body portion 100. In practical applications, the heave compensation tool 1 can also be provided with only the first driving portion 107, or only the second driving portion 108. Of course, in this embodiment, the driving mechanism simultaneously includes the first driving portion 107 and the second driving portion 108. Firstly, the heave compensation function is a dual-drive compensation mechanism, belonging to a redundant design and providing high reliability. At the same time, the two driving portions can provide a wider range of driving force. When the heave compensation tool 1 is connected to a wind turbine component of greater weight, the two driving portions can be started simultaneously to provide a greater driving force, causing the moving block 101 to move for heave compensation. When the heave compensation tool 1 is connected to a wind turbine component of lesser weight, one of the two driving portions can be selectively started to cause the moving block 101 to move for heave compensation, reducing energy consumption. It can be seen that the heave compensation tool 1 of the present application has a wider range of applications.

Reference is continually made to FIG. 1. As mentioned above, the moving block 101 is slidably mounted on the main body portion 100. Specifically in this embodiment, guide rails 100a are provided on both the front and rear side walls of the main body portion 100. The guide rails 100a extend along the axial direction of the main body portion 100. The guide rails 100a has engaging slots **c** on both sides in the width direction. The engaging slots **c** extend along the axial direction of the main body portion 100. Two engaging protrusions 101a are provided on the inner side of the corresponding side wall of the moving block 101. The engaging protrusions 101a are generally L-shaped, and the free ends of the engaging protrusions 101a are slidably mounted inside the corresponding engaging slots **c**.

In this way, the engaging protrusions 101a can slide along the extension direction of the engaging slots **c**, and the engaging protrusions 101a and the engaging slots **c** are mutually limited in a first direction and a second direction. The first direction is perpendicular to the second direction, and the second direction is perpendicular to the axial direction of the main body portion 100, and the first direction is perpendicular to the axial direction of the main body portion 100. Taking the perspective of FIG. 1 as an example, one of the first direction and the second direction is the front-rear direction, and the other is the left-right direction.

In this way, the cooperation of the engaging slots **c** and the engaging protrusions 101a can guide the moving block 101, so that the moving block 101 can only slide along the extension direction of the engaging slots **c**. At the same time, the engaging slots **c** and the engaging protrusions 101a are mutually limited in the first direction and the second direction. The first direction is perpendicular to the second direction, and the second direction is perpendicular to the axial direction of the main body portion 100, and the first direction is perpendicular to the axial direction of the main body portion 100. That is, in a plane perpendicular to the axial direction of the main body portion 100, the engaging slots **c** and the engaging protrusions 101a are mutually limited, ensuring that the moving block 101 does not generate movement in other directions except along the axial direction of the main body portion 100, thereby ensuring the positional accuracy of the moving block 101.

In this embodiment, guide rails 100a are provided on both the front and rear side walls of the main body portion 100, and engaging protrusions 101a are provided on the inner sides of both the front and rear side walls of the moving block 101. In practical applications, the number of guide rails 100a provided on the main body portion 100 is not limited. For example, the number of guide rails 100a can be at least one. When the number of guide rails 100a is one, the guide rail 100a can be arranged on the front or rear side wall of the main body portion 100. Of course, if the left and right side walls of the main body portion 100 have sufficient space, it is also feasible to arrange the guide rail 100a on the left or right side wall of the main body portion 100, and the moving block 101 simply needs to be provided with the engaging protrusions 101a on the side wall corresponding to the guide rail 100a.

In this embodiment, the guide rail 100a is provided with engaging slots **c** on both sides in the width direction, and the moving block 101 is correspondingly provided with two engaging protrusions 101a. In practical applications, the number and shape of the engaging slots **c** provided on the guide rail 100a are not limited. For example, the number of engaging slots **c** can be one, arranged in the middle of the guide rail 100a, and the engaging slot **c** is generally T-shaped. The moving block 101 is correspondingly provided with one engaging protrusion 101a, which is also of a matching T-shape, and the engaging protrusion 101a is slidably mounted inside the engaging slot **c**. At this time, the cooperation of the engaging protrusion 101a and the engaging slot **c** can also limit the moving block 101 in the first and second directions.

Furthermore, in practical applications, it is also feasible for the guide rail 100a to be provided with the engaging protrusion 101a, and the corresponding side wall of the moving block 101 to be provided with the engaging slot **c**.

It can be seen from FIG. 1 that, in this embodiment, the main body portion 100 is of a columnar structure, and the moving block 101 is of an annular structure, with the moving block 101 mounted on the outer periphery of the main body portion 100. In practical applications, the specific structures of the moving block 101 and the main body portion 100 are not limited. For example, it is also feasible for the main body portion 100 to be a frame structure, and the moving block 101 is arranged inside the main body portion 100 and can slide along the axial direction of the main body portion 100.

It can be understood that when the heave compensation tool 1 of the present application is applied to offshore installation and maintenance of floating wind turbines, the heave compensation tool 1 needs to hoist different wind turbine components, such as a tower, a nacelle, a hub, a blade, or a nacelle-hub assembly. The lifting points for different wind turbine components are different. If the second lifting portion 103 is fixed to the moving block 101, the entire position of the moving block 101 needs to be moved by adjusting the position of the hook 511 when different wind turbine components are required to hoist, which is inconvenient to operate.

Based on this, the heave compensation tool 1 of the present application further includes an adjustment mechanism 111. As shown in FIG. 1 to FIG. 6, the adjustment mechanism 111 is connected between the moving block 101 and the second lifting portion 103. The adjustment mechanism 111 can drive the second lifting portion 103 to move along the first direction and the second direction. The first direction is perpendicular to the second direction, and the second direction is perpendicular to the axial direction of the main body portion 100, and the first direction is perpendicular to the axial direction of the main body portion 100.

Since the second lifting portion 103 is arranged on the moving block 101, and the moving block 101 can move along the axial direction of the main body portion 100, the second lifting portion 103 is first adjustable along the axial direction of the main body portion 100. At the same time, the provision of the adjustment mechanism 111 as described above allows the second lifting portion 103 to be adjustable along both the first direction and the second direction. Since the first direction, the second direction, and the axial direction of the main body portion 100 are mutually perpendicular to each other, the lifting position of the second lifting portion 103 can actually be adjusted to any required position, making it suitable for the dynamic hoisting of different wind turbine components, thus giving the heave compensation tool 1 of the present application strong versatility.

Specifically, as shown in FIG. 1 and FIG. 4, the adjustment mechanism 111 includes a first lead screw and nut transmission unit and a third driving unit 1111. The first lead screw and nut transmission unit includes a first lead screw 1112 and a first lead screw nut 1113 that are threadedly connected. The first lead screw 1112 extends along the first direction. The first lead screw 1112 is rotatably mounted on the moving block 101. An output shaft of the third driving unit 1111 is connected to the first lead screw 1112 for driving the first lead screw 1112 to rotate.

The adjustment mechanism 111 also includes an adjustment arm 1114 and a fourth driving unit 1115. The adjustment arm 1114 and the first lead screw nut 1113 are connected together. The fourth driving unit 1115 is arranged on a lower side wall of the adjustment arm 1114. An output shaft of the fourth driving unit 1115 can extend or retract along the second direction. The output shaft of the fourth driving unit 1115 is connected to the second lifting portion 103. The third driving unit 1111 and the fourth driving unit 1115 are both electrically connected to the controller 105.

The third driving unit 1111 can specifically be a driving motor, and the fourth driving unit 1115 can specifically be a linear displacement power mechanism such as an air cylinder, a hydraulic cylinder, or an electric cylinder.

When the heave compensation tool 1 of the present application hoists different wind turbine components, the controller 105 can control the actions of the third driving unit 1111 and the fourth driving unit 1115. Specifically: the controller 105 controls the output shaft of the third driving unit 1111 to rotate. The output shaft of the third driving unit 1111 can drive the first lead screw 1112 to rotate synchronously. Under the threaded engagement action of the first lead screw 1112 and the first lead screw nut 1113, the first lead screw nut 1113 can move along the axial direction of the first lead screw 1112, i.e., the first lead screw nut 1113 can move along the first direction. Since the adjustment arm 1114 and the first lead screw nut 1113 are connected together, the adjustment arm 1114 can also move along the first direction. Since the second lifting portion 103 is connected to the adjustment arm 1114 via the fourth driving unit 1115, this realizes the adjustment of the lifting point position of the second lifting portion 103 along the first direction. The output shaft of the fourth driving unit 1115 extends along the second direction. The controller 105 controls the output shaft of the fourth driving unit 1115 to extend or retract, thereby realizing the adjustment of the lifting point position of the second lifting portion 103 along the second direction. This allows the lifting point position of the second lifting portion 103 to be adjustable in the horizontal direction, thereby enabling the lifting point position of the second lifting portion 103 to correspond to the hoisting points on the lifting tools of different wind turbine components, facilitating the connection of the second lifting portion 103 with the lifting tools of different wind turbine components, making it suitable for the dynamic hoisting of different wind turbine components, and ensuring that the heave compensation tool of the present application has strong versatility.

It can be seen from FIG. 1 to FIG. 6 that, in this embodiment, the second lifting portion 103 has four lifting seats 1031. Each lifting seat 1031 has one lifting point. Two lifting seats 1031 form a group and are arranged on the front and rear side walls of the moving block 101. The number of adjustment mechanisms 111 is also four, and the lifting seats 1031 are correspondingly connected to the moving block 101 via the adjustment mechanisms 111.

In this way, the second lifting portion 103 can be connected to the lifting tools of different wind turbine components via the four lifting points. Of course, in practical applications, the number of lifting seats 1031 or lifting points is not limited, as long as the hoisting stability of the wind turbine components can be ensured. For example, the number of lifting seats 1031 can also be three.

At the same time, each adjustment mechanism 111 can adjust the horizontal position of one lifting seat 1031. When the distance between two hoisting points on the same side of the lifting tools of different wind turbine components is different, the two third driving units 1111 in the two adjustment mechanisms 111 on the same side can rotate in opposite directions, causing the two adjustment arms 1114 to approach or move away from each other, thereby adjusting the distance between the two lifting seats 1031 on the same side, ensuring that the lifting points and the hoisting points are in one-to-one correspondence in position. When the distance between two hoisting points on different sides of the lifting tools of different wind turbine components is different, the output shafts of the two fourth driving units 1115 in the corresponding two adjustment mechanisms 111 can extend or retract simultaneously, causing the two lifting seats 1031 on different sides to approach or move away from each other, thereby adjusting the distance between the two lifting seats 1031 on different sides.

In practical applications, two adjustment mechanisms 111 on the same side can also share the same third driving unit 1111 and the same first lead screw 1112. Specifically, the peripheral wall of the first lead screw 1112 has external threads, and the threading directions of the external threads at the two ends of the first lead screw 1112 are opposite. The first lead screw nuts 1113 in the two adjustment mechanisms 111 are threaded onto the two ends of the first lead screw 1112. The output shaft of the third driving unit 1111 is connected to this first lead screw 1112. In this way, the output shaft of the third driving unit 1111 can drive the first lead screw 1112 to rotate synchronously. Since the threading directions of the external threads at the two ends of the first lead screw 1112 are opposite, under the threaded engagement action of the first lead screw 1112 and the two first lead screw nuts 1113, the two first lead screw nuts 1113 can move in directions approaching or moving away from each other, thereby adjusting the distance between the two lifting seats 1031 on the same side.

Furthermore, in practical applications, the method for realizing the position switching of the adjustment arm 1114 along the first direction is not limited to the above combination of the first lead screw and nut transmission unit and the driving motor. For example, the output shaft of the third driving unit 1111 can be directly connected to the adjustment arm 1114, and the third driving unit 1111 is a linear displacement power mechanism such as an air cylinder, a hydraulic cylinder, or an electric cylinder.

Reference is continually made to FIG. 1. In this embodiment, the adjustment arm 1114 includes a first adjustment arm 1114a and a second adjustment arm 1114b arranged at an included angle. The first adjustment arm 1114a extends along the second direction. The second adjustment arm 1114b extends obliquely upward in a direction away from the first adjustment arm 1114a. The adjustment mechanism 111 includes two first lead screw and nut transmission units, which are arranged one above the other. The free end of the first adjustment arm 1114a is connected together with the first lead screw nut 1113 in the lower first lead screw and nut transmission unit. The free end of the second adjustment arm 1114b is connected together with the first lead screw nut 1113 in the upper first lead screw and nut transmission unit. The adjustment mechanism 111 also includes two third driving units 1111, which are correspondingly connected one-to-one with the first lead screws 1112 in the first lead screw and nut transmission units.

In this way, during operation, the controller 105 can control the two third driving units 1111 to act synchronously, realizing the position adjustment of the adjustment arm 1114 along the first direction, which belongs to a redundant design and has strong reliability. At the same time, in the adjustment arm 1114, the first adjustment arm 1114a plays the main load-bearing role, and the second adjustment arm 1114b can play a reinforcing role, thereby improving the structural strength of the adjustment arm 1114 and the hoisting stability of the wind turbine components, further improving the reliability of the heave compensation tool 1 of the present application.

In practical applications, the specific structure of the adjustment arm 1114 is not limited. For example, it is also feasible to provide only the first adjustment arm 1114a on the premise of ensuring the structural strength of the first adjustment arm 1114a.

Further, as shown in FIG. 1, a T-shaped guide slot **d** is formed on the lower side wall of the first adjustment arm 1114a. The guide slot **d** extends along the second direction. The connecting end of the lifting seat 1031 is generally T-shaped or I-shaped. The connecting end of the lifting seat 1031 is slidably mounted inside the guide slot **d**. In this way, the guide slot **d** can guide the lifting seat 1031, so that the lifting seat 1031 can only slide along the extension direction of the guide slot **d** under the action of the fourth driving unit 1115, ensuring the positional accuracy of the lifting seat 1031. In practice, the fourth driving unit 1115 can also be arranged inside the guide slot **d**.

In FIG. 4 and FIG. 5, the lifting seat 1031 specifically includes a slider 1031a located inside the guide slot. The slider 1031a is generally T-shaped or I-shaped, forming the aforementioned connecting end. Two oppositely arranged second lugs 1031b are connected to the bottom wall of the slider 1031a. A lifting ring 1031c is hinged between the two second lugs 1031b via a pin. The lifting ring 1031c is connected to a shackle 1031d. The shackle 1031d is used for connecting to the lifting tool of the wind turbine component to be installed via the lifting belt 106.

As mentioned above, the first lead screw 1112 is rotatably mounted on the moving block 101. Specifically in this embodiment, two oppositely arranged third lugs 112 are connected to the side wall of the moving block 101. The two third lugs 112 are arranged along the first direction. The two third lugs 112 correspondingly have mounting holes. Bearings are installed inside the mounting holes. The first lead screw 1112 is mounted on the moving block 101 via the bearings at its two ends, ensuring the rotational smoothness of the first lead screw 1112.

It can be understood that when the heave compensation tool 1 of the present application is used for the connection and installation of the wind turbine component 2 to be installed and the already installed wind turbine component 4, it is necessary to ensure that the reference lines on the flanges of the wind turbine components can be aligned with each other. Therefore, the heave compensation tool 1 of the present application further includes a rotation mechanism 113. As shown in FIG. 1, the rotation mechanism 113 is connected between the main body portion 100 and the first lifting portion 102. The rotation mechanism 113 can drive the main body portion 100 and the moving block 101 to rotate relative to the first lifting portion 102, thereby rotating the wind turbine component 2 to be installed connected to the moving block 101, thus ensuring that the reference lines are aligned and the orientation is accurate when the wind turbine component 2 to be installed is connected to the already installed wind turbine component 4.

Specifically, the rotation mechanism 113 includes a connecting bearing 1131. The lower end of an outer ring of the connecting bearing 1131 is connected to the main body portion 100. The upper end of the outer ring of the connecting bearing 1131 is provided with a meshing tooth portion 1131a along the circumferential direction. The inner ring of the connecting bearing 1131 is connected to the first lifting portion 102. The rotation mechanism 113 also includes a fifth driving unit and a driving tooth portion 1132. The driving tooth portion 1132 and the meshing tooth portion 1131a mesh with each other. The fifth driving unit is in transmission connection with the driving tooth portion 1131a. The fifth driving unit is used to drive the driving tooth portion 1132 to rotate. The fifth driving unit is electrically connected to the controller 105.

In this way, during operation, the fifth driving unit can first drive the driving tooth portion 1132 to rotate. Under the meshing action of the driving tooth portion 1132 and the meshing tooth portion 1131a, the driving tooth portion 1132 drives the outer ring of the connecting bearing 1131 to rotate. Since the lower end of the outer ring of the connecting bearing 1131 is connected to the main body portion 100, the main body portion 100 and the moving block 101 can rotate synchronously with the outer ring of the connecting bearing 1131, thereby driving the wind turbine component 2 to be installed to rotate, ensuring that the reference lines can be aligned with each other when the wind turbine component 2 to be installed is connected to the already installed wind turbine component 4.

In this embodiment, the driving tooth portion 1132 is a worm. The fifth driving unit includes a power component 1133, and a first bevel gear 1134 and a second bevel gear 1135 that mesh with each other. The output shaft of the power component 1133 is connected to the first bevel gear 1134. The power component 1133 is used to drive the first bevel gear 1134 to rotate. The worm is connected to the second bevel gear 1135.

The power component 1133 may be a driving motor. In this way, during operation, the rotation of the output shaft of the driving motor can drive the first bevel gear 1134 to rotate synchronously. Under the meshing action of the first bevel gear 1134 and the second bevel gear 1135, the first bevel gear 1134 drives the second bevel gear 1135 to rotate synchronously. Since the worm is connected to the second bevel gear 1135, the second bevel gear 1135 can drive the worm to rotate synchronously, and then under the meshing action of the worm and the outer ring of the connecting bearing 1131, the rotation of the outer ring of the connecting bearing 1131 is realized.

It can be seen that, in this embodiment, the first bevel gear 1134 and the second bevel gear 1135 mainly serve to transmit power and change the transmission direction, allowing the power component 1133 and the worm to be arranged on two adjacent sides of the main body portion 100. Of course, in practical applications, if one side of the main body portion 100 has sufficient installation space, it is also feasible not to provide the first bevel gear 1134 and the second bevel gear 1135, and the output shaft of the power component 1133 can be directly connected to the worm.

In this embodiment, the driving tooth portion 1132 is a worm. In practice, the driving tooth portion 1132 may also be a driving gear, which uses gear meshing transmission with the outer ring of the connecting bearing 1131, and the output shaft of the power component 1133 is directly connected to the driving gear. In this way, the output shaft of the power component 1133 can drive the driving gear to rotate, and under the meshing action of the driving gear and the outer ring of the connecting bearing 1131, the rotation of the outer ring of the connecting bearing 1131 is realized.

It can be seen from FIG. 1 that, in this embodiment, two mounting plates 114 are connected to the peripheral wall of the first lifting portion 102. Both of the numbers of fifth driving units and driving tooth portions 1132 are two. The fifth driving units are correspondingly connected one-to-one with the driving tooth portions 1132, forming a driving portion. The driving portion is connected to the lower side wall of the corresponding mounting plate 114.

Of course, in practical applications, the number of driving portion is not limited. For example, the number of driving portion can be at least one. The mounting plate 114 mainly serves to connect the driving portion, so the number of mounting plates 114 can be consistent with the number of driving portion. The connection method between the first lifting portion 102 and the mounting plate 114 is not limited. For example, the first lifting portion 102 and the mounting plate 114 can be fixed by welding.

As mentioned above, the driving portion is connected to the lower side wall of the corresponding mounting plate 114. Specifically, as shown in FIG. 6, two oppositely arranged fourth lugs 115 are connected to the lower side wall of the mounting plate 114. Rotating bearings are installed inside the fourth lugs 115. The driving tooth portion 1132 is mounted on the two fourth lugs 115 via connecting bearings, ensuring the rotational smoothness of the driving tooth portion 1132. The power component 1133 is fixed to the lower surface of the mounting plate 114 via its fixing seat. The extension direction of the output shaft of the power component 1133 is perpendicular to the extension direction of the driving tooth portion 1132. A fifth lug 116 is connected to the lower side wall of the mounting plate 114. A rotating bearing is installed inside the fifth lug 116. The output shaft of the power component 1133 passes through this rotating bearing, ensuring the rotational smoothness of the output shaft of the power component 1133.

As mentioned above, the lower end of the outer ring of the connecting bearing 1131 is connected to the main body portion 100. The specific connection method is not limited. For example, the lower end of the outer ring of the connecting bearing 1131 and the main body portion 100 can be fixed by welding.

As mentioned above, the inner ring of the connecting bearing 1131 is connected to the first lifting portion 102. The specific connection method is not limited. For example, the inner ring of the connecting bearing 1131 and the first lifting portion 102 can be fixed by bolts, welding, etc..

Reference is continually made to FIG. 1. In this embodiment, the first lifting portion 102 specifically includes a lifting beam 1021. A lifting seat 1022 is connected to the top of the lifting beam 1021. The lifting seat 1022 connects the entire heave compensation tool 1 to the hook 51 of the jack-up platform installation vessel 5 via the lifting belt 106.

It can be understood that, in actual work, the heave compensation tool 1 is inevitably subjected to forces such as wind loads at high altitudes. To ensure the stable posture of the heave compensation tool 1 and the wind turbine component to be installed at high altitudes, and to prevent the heave compensation tool 1 and the wind turbine component to be installed from deflecting or swaying due to wind loads, the heave compensation tool 1 of the present application further includes a self-stabilizing mechanism 117. As shown in FIG. 6, the self-stabilizing mechanism 117 includes a telescopic unit 1171, a connecting rope 1172, and a tension sensor 1173. The telescopic unit 1171 is arranged on the main body portion 100. The telescopic unit 1171 and the connecting rope 1172 are connected to each other. An end of the connecting rope 1172 remote from the telescopic unit 1171 is used for connecting to a boom 52 of a crane. A telescopic direction of the telescopic unit 1171 has an included angle with the axial direction of the main body portion 100. The tension sensor 1173 is arranged on the connecting rope 1172. The telescopic unit 1171 is electrically connected to the controller 105. The controller 105 is used to control the telescoping of the telescopic unit 1171 so that the tension of the connecting rope 1172 is constant.

In this way, when the heave compensation tool 1 is hoisting the wind turbine component 2 to be installed and is in a stable state at a high altitude, the tension sensor 1173 detects that the connecting rope 1172 has a preset tension. When the heave compensation tool 1 deflects due to wind loads, the detection value of the tension sensor 1173 will change, and the detection result is fed back to the controller 105. The controller 105 will issue an action command signal to the telescopic unit 1171 for controlling the telescopic unit 1171 to perform a telescoping action, so that the tension of the connecting rope 1172 returns to the preset tension value of the stable state. When the controller 105 receives the detection result from the tension sensor 1173 indicating that the preset tension has been restored, the controller 105 will issue a command signal to stop the telescopic unit 1171, thereby ensuring that the heave compensation tool 1 hoisting the wind turbine component 2 to be installed always remains in a stable state at a high altitude.

Further, the telescopic unit 1171 specifically includes a driving assembly and an X-shaped telescopic frame 1171a. The driving assembly comprises a sixth driving unit 1171b and a second lead screw and nut transmission unit. The second lead screw and nut transmission unit comprises a second lead screw 1171c and a second lead screw nut 1171d that are threadedly connected. The second lead screw 1171c is rotatably mounted on the main body portion 100. An output shaft of the sixth driving unit 1171b is connected to the second lead screw 1171c for driving the second lead screw 1171c to rotate. The sixth driving unit 1171b is electrically connected to the controller 105.

An end of the X-shaped telescopic frame 1171a remote from the connecting rope 1172 has two connecting ends, one of which is hinged to the main body portion 100, and the other connecting end is connected to the second lead screw nut 1171d.

The sixth driving unit 1171b can be a driving motor. During operation, when the sixth driving unit 1171b receives an extension command from the controller 105, the sixth driving unit 1171b can drive the second lead screw 1171c to rotate. Under the threaded engagement action of the second lead screw 1171c and the second lead screw nut 1171d, the second lead screw nut 1171d moves along the axial direction of the second lead screw 1171c. The two telescopic arms in the X-shaped telescopic frame 1171a approach each other around the hinge point, the included angle between the two telescopic arms gradually decreases, and the X-shaped telescopic frame 1171a gradually extends. When the sixth driving unit 1171b receives a retraction command from the controller 105, the sixth driving unit 1171b can drive the second lead screw 1171c to rotate in the opposite direction. Under the threaded engagement action of the second lead screw 1171c and the second lead screw nut 1171d, the second lead screw nut 1171d moves in the opposite direction along the axial direction of the second lead screw 1171c. The two telescopic arms in the X-shaped telescopic frame 1171a move away from each other around the hinge point, the included angle between the two telescopic arms gradually increases, and the X-shaped telescopic frame 1171a gradually retracts.

As mentioned above, the second lead screw 1171c is rotatably mounted on the main body portion 100. Specifically, two oppositely arranged sixth lugs 118 are connected to the main body portion 100. Inner bearings are installed inside the sixth lugs 118. The second lead screw 1171c is connected to the sixth lugs 118 via inner bearings at its two ends, thereby ensuring the rotational smoothness of the second lead screw 1171c.

As mentioned above, one of the connecting ends of the X-shaped telescopic frame 1171a is hinged to the main body portion 100. Specifically in this embodiment, a connecting block 119 is fixed to the side wall of the main body portion 100. The specific fixing method is not limited. For example, the connecting block 119 and the main body portion 100 can be fixed by welding. Two oppositely arranged lugs are connected to an end wall of the connecting block 119 facing away from the main body portion 100. One of the connecting ends of the X-shaped telescopic frame 1171a is hinged between the two lugs via a pin.

In practical applications, the number of self-stabilizing mechanisms 117 is not limited. For example, the number of self-stabilizing mechanisms 117 can be at least one. In this embodiment, the heave compensation tool 1 is provided with two self-stabilizing mechanisms 117, providing two connection points between the main body portion 100 and the boom 52 of the crane, further improving the posture stability of the heave compensation tool 1 at high altitudes.

In this embodiment, the telescopic unit 1171 adopts the form of a driving assembly and an X-shaped telescopic frame 1171a. In practical applications, the telescopic unit 1171 can also be an air cylinder/hydraulic cylinder, and the push rod of the air cylinder/hydraulic cylinder is directly connected to the connecting rope 1172.

As mentioned above, the telescopic direction of the telescopic unit 1171 has an included angle with the axial direction of the main body portion 100. In this embodiment, the telescopic direction of the telescopic unit 1171 is perpendicular to the axial direction of the main body portion 100. It can be understood that, in practice, it is also feasible for the telescopic direction of the telescopic unit 1171 not to be perpendicular to the axial direction of the main body portion 100, as long as the tension of the connecting rope 1172 can be kept constant through the telescoping of the telescopic unit 1171.

In addition, it can be seen from FIG. 1 that, in this embodiment, the heave compensation tool 1 is also provided with a power supply unit 120. The power supply unit 120 is arranged at the upper end of the main body portion 100 and is used to provide power for the entire heave compensation tool 1.

In practical applications, the arrangement position of the power supply unit 120 is not limited. The power supply unit 120 can specifically be a diesel generator, etc..

The present application also provides a heave compensation system. The heave compensation system includes the aforementioned heave compensation tool 1,
in the heave compensation tool 1, the first lifting portion 102 is connected to a lifting device, and the second lifting portion 103 is connected to the wind turbine component 2 to be installed;
it further includes a second sensor 6, the second sensor 6 is used to detect a heave state of the already installed wind turbine component 4, and the second sensor 6 is electrically connected to the controller 105.

The heave compensation system of the present application includes the aforementioned heave compensation tool 1, thus has the same technical effects as the aforementioned heave compensation tool 1, which will not be repeated here.

When the heave compensation system of the present application is used for offshore installation and maintenance of floating wind turbines using a jack-up platform, the lifting device is the hook 51 of the jack-up platform installation vessel 5, and the second sensor 6 can be arranged on the floating foundation 3.

The present application also provides a heave compensation method, based on the aforementioned heave compensation system, including the following steps:
detecting a heave state of an already installed wind turbine component 4, and controlling a moving block 101 to perform heave compensation, so that the already installed wind turbine component 4 and the moving block 101 have the same heave displacement.

The heave compensation method of the present application is based on the aforementioned heave compensation system, thus has the same technical effects as the aforementioned heave compensation system, which will not be repeated here.

It can be understood that this heave compensation method is applicable not only to the mutual connection of wind turbine components, but also to the replacement of wind turbine components, ensuring that the hoisted wind turbine component and the wind turbine component connected to the floating foundation 3 always remain relatively stationary, the lifting force of the crane remains constant, and loosening or tightening the connecting bolts is more effective and safer.

Further, as mentioned above, the heave compensation tool 1 further includes an adjustment mechanism 111. The adjustment mechanism 111 is connected between the moving block 101 and the second lifting portion 103. The adjustment mechanism 111 can drive the second lifting portion 103 to move along the first direction and the second direction. The first direction is perpendicular to the second direction, and the second direction is perpendicular to the axial direction of the main body portion 100, and the first direction is perpendicular to the axial direction of the main body portion 100. Therefore, before hoisting the wind turbine component 2 to be installed, the heave compensation method further includes the following step:
controlling the adjustment mechanism 111 to act, and driving the second lifting portion 103 to move along the first direction and the second direction, so that the lifting position of the second lifting portion 103 corresponds to the lifting point position on the lifting tool of the wind turbine component 2 to be installed.

In this way, it is suitable for dynamic hoisting of different wind turbine components, improving the versatility of the heave compensation tool and the heave compensation system of the present application.

Further, as mentioned above, the heave compensation tool 1 further includes a rotation mechanism 113. The rotation mechanism 113 is connected between the main body portion 100 and the first lifting portion 102. The rotation mechanism 113 can drive the main body portion 100 to rotate relative to the first lifting portion 102. The heave compensation method further includes the following step:
controlling the rotation mechanism 113 to act, and driving the main body portion 100 to rotate relative to the first lifting portion 102, so that the flange reference line of the wind turbine component 2 to be installed can be aligned with the flange reference line of the already installed wind turbine component 4.

Further, as mentioned above, in the heave compensation system, the heave compensation tool 1 further includes a self-stabilizing mechanism 117. The self-stabilizing mechanism 117 includes a telescopic unit 1171, a connecting rope 1172, and a tension sensor 1173. The telescopic unit 1171 is arranged on the main body portion 100. The telescopic unit 1171 and the connecting rope 1172 are connected to each other. A telescopic direction of the telescopic unit 1171 has an included angle with the axial direction of the main body portion 100. The tension sensor 1173 is arranged on the connecting rope 1172. The telescopic unit 1171 and the tension sensor 1173 are both electrically connected to the controller 105. The controller 105 is used to control the telescoping of the telescopic unit 1171 so that the tension of the connecting rope 1172 is constant. The heave compensation method further includes the following step:
detecting the tension of the connecting rope 1172, and when the tension of the connecting rope 1172 deviates from a preset tension, controlling the telescopic unit 1171 to telescope, and when the tension of the connecting rope 1172 returns to the preset tension, controlling the telescopic unit 1171 to stop acting.

The preset tension is the tension of the connecting rope 1172 when the heave compensation tool 1 is hoisting the wind turbine component in a stable state at a high altitude.

With the above configuration, by adjusting the connecting rope 1172 via the telescopic unit 1171 to always have the preset tension, it is ensured that the heave compensation tool 1 hoisting the wind turbine component is always in a stable state at a high altitude.

The heave compensation tool, the heave compensation system, and the heave compensation method provided by the present application have been described in detail above. Specific examples have been used herein to explain the principles and embodiments of the present application. The description of the above embodiments is only intended to help understand the method and core idea of the present application. It should be pointed out that for those of ordinary skill in the art, without departing from the principles of the present application, several improvements and modifications can be made to the present application, and these improvements and modifications also fall within the scope of protection of the claims of the present application.

## Claims

1. A heave compensation tool, comprising:
a main body portion;
a moving block slidably mounted on the main body portion;
a driving mechanism for driving the moving block to slide along an axial direction of the main body portion;
a first sensor for detecting a heave state of the moving block;
wherein, the main body portion is provided with a first lifting portion, and the moving block is provided with a second lifting portion.

2. The heave compensation tool according to claim 1, wherein the first sensor is arranged on the moving block.

3. The heave compensation tool according to claim 1, wherein the driving mechanism and the first sensor are both electrically connected to a controller, and the controller is configured to control action of the driving mechanism so that the moving block has a preset heave displacement.

4. The heave compensation tool according to claim 1, wherein the heave compensation tool further comprises an adjustment mechanism, the adjustment mechanism is connected between the moving block and the second lifting portion, and the adjustment mechanism is capable of driving the second lifting portion to move along a first direction and a second direction, and the first direction is perpendicular to the second direction, and the second direction is perpendicular to the axial direction of the main body portion, and the first direction is perpendicular to the axial direction of the main body portion.

5. The heave compensation tool according to any one of claims 1 to 4, wherein the heave compensation tool further comprises a rotation mechanism, the rotation mechanism is connected between the main body portion and the first lifting portion, and the rotation mechanism is configured to drive the main body portion to rotate relative to the first lifting portion.

6. The heave compensation tool according to any one of claims 1 to 4, wherein the heave compensation tool further comprises a self-stabilizing mechanism, the self-stabilizing mechanism is configured to connect the main body portion and a boom of a lifting device, and to adjust a tension force between the main body portion and the boom, so as to stabilize a posture of the heave compensation tool.

7. The heave compensation tool according to claim 6, wherein the self-stabilizing mechanism comprises a telescopic unit, a connecting rope, and a tension sensor, the telescopic unit is arranged on the main body portion, the telescopic unit and the connecting rope are connected to each other, and an end of the connecting rope remote from the telescopic unit is configured for connecting to the boom.

8. The heave compensation tool according to claim 7, wherein a telescopic direction of the telescopic unit has an included angle with the axial direction of the main body portion.

9. The heave compensation tool according to claim 7, wherein the tension sensor is arranged on the connecting rope.

10. The heave compensation tool according to claim 9, wherein the telescopic unit and the tension sensor are both electrically connected to a controller, and the controller is configured to control the telescoping of the telescopic unit so that a tension force of the connecting rope is constant.

11. A heave compensation system, comprising the heave compensation tool according to any one of claims 1 to 10 and a second sensor,
wherein, the first lifting portion of the heave compensation tool is connected to a lifting device, and the second lifting portion is connected to a wind turbine component to be installed;
the second sensor is configured to detect a heave state of an already installed wind turbine component, and the second sensor is electrically connected to the controller.

12. A heave compensation method, based on the heave compensation system according to claim 11, comprising following steps:
detecting the heave state of an already installed wind turbine component, and controlling a moving block to perform heave compensation, so that the already installed wind turbine component and the moving block have the same heave displacement.

13. The heave compensation method according to claim 12, wherein, before hoisting a wind turbine component to be installed, the heave compensation method further comprises a following step:
controlling an adjustment mechanism to act, and driving a second lifting portion to move along a first direction and a second direction, so that a lifting position of the second lifting portion corresponds to a lifting point position on a lifting tool of the wind turbine component to be installed.

14. The heave compensation method according to claim 12, further comprising a following step:
controlling a rotation mechanism to act, and driving a main body portion to rotate relative to a first lifting portion, so that a flange reference line of the wind turbine component to be installed is aligned with a flange reference line of the already installed wind turbine component.

15. The heave compensation method according to claim 12, further comprising a following step:
detecting tension of a connecting rope, and when the tension of the connecting rope deviates from a preset tension, controlling a telescopic unit to telescope, and when the tension of the connecting rope returns to the preset tension, controlling the telescopic unit to stop acting.
